# EUROPEAN PATENT APPLICATION

(11) **EP 0 798 824 A2**
(43) Date of publication of application: **01.10.1997**
(21) Application number: 97302016.7
(22) Date of filing: 25.03.1997
(51) Int. Cl.: H01S 3/06, H01S 3/10

(54) **Microchip lasers**

(30) Priority: 26.03.1996 GB 9606323
(71) Applicant: Spectron Laser Systems Limited, Rugby, Warwickshire CV21 1PB (GB)
(72) Inventor: Sarkies, Paul Harold, Rugby, Warwickshire CV21 1PB (GB)
(74) Representative: Williamson, Brian

(57) **Abstract**

A microchip laser comprises first and second mirrors at spaced locations along an optical axis and defining a resonance cavity therebetween. A gain element formed of a gain material is located in the cavity. Spacing means providing a temperature dependent distance of separation between the mirrors which is greater than the axial thickness of the gain element such that a variable gap is defined between the first mirror and a first face of the gain element are also provided along with temperature regulating means operable to control the temperature of the gain element and the spacing means.

## Description

This invention relates to microchip lasers and in particular but not exclusively to a diode pumped YAG laser providing a tuneable single frequency output for use in a laser injection seeding system.

It is known from WO90/09688 to provide a microchip laser in which a gain element formed of a suitable gain material such as Nd:YAG is located within a resonance cavity defined by first and second mirrors whose separation defines a cavity length. It is also known to select a cavity length which is sufficiently short such that the frequency separation of cavity modes is sufficiently large to ensure that only a single cavity mode frequency falls within the gain band width of the gain medium, thereby making it possible to achieve single frequency operation.

It is also known to vary the frequency of the output by regulating the temperature of the gain medium since the peak gain frequency is temperature dependent. Typically the first and second mirrors are formed as layers deposited on first and second faces respectively of the gain element. The mirrors are made partially reflecting so that light from a pumping laser diode may enter the first mirror and the output is emergent from the second mirror in use.

In order to use such a microchip laser in a laser injection seeding system, it is necessary to produce an output within a specific frequency range corresponding to an operating temperature of the gain material specified to within a few degrees (typically plus or minus 5°C).

A disadvantage of such microchip lasers is that the cavity mode frequencies, are determined by the precise value of the cavity length. Since satisfactory operation of the laser depends upon a cavity mode frequency being coincident with, or nearly coincident with, the peak gain frequency, the successful manufacture of a microchip laser operating at a specific temperature depends on being able to determine the resonant cavity length to within a fraction of a wavelength at the operating frequency. Such manufacture on a commercial scale therefore presents practical difficulties.

According to the present invention there is disclosed a microchip laser comprising;
first and second mirrors spaced locations along an optical axis and defining a resonance cavity therebetween;
a gain element formed of a gain material located in the cavity;
spacing means providing a temperature dependent distance of separation between the mirrors which is greater than the axial thickness of the gain element such that a variable gap is defined between the first mirror and a first face of the gain element; and
temperature regulating means operable to control the temperature of the gain element and the spacing means.

An advantage of such an arrangement is that the cavity length (i.e. the optical path length between the first and second mirrors) varies as a function of temperature in a manner which is not determined solely by the thermal expansion characteristics of the gain material. A disadvantage of known microchip lasers in which the first and second mirrors are formed on the faces of the gain element and which do not include a variable gap is that the cavity mode frequencies of the resonance cavity vary as a function of temperature at a rate which is close to the rate of variation with temperature of the peak gain frequency of the gain material. Consequently it may be necessary to undergo a large temperature change before a cavity mode frequency can be made coincident with the peak gain frequency of the gain material to effect lasing. The use of the spacing means in accordance with the present invention enables the rate of variation of cavity mode frequency with temperature to be determined at any desired value by suitable configuration of the spacing means.

It is therefore possible in accordance with the present invention to effect a relatively large difference in rate of frequency change with temperature (i.e. when comparing the rate of change of cavity mode frequency with the rate of change of peak gain band width of the gain material).

Preferably the second mirror is formed on a second face of the gain element.

Such an arrangement is simple and robust in configuration, the gain element then having a mirror formed on only one of its faces.

Preferably the spacing means comprises first and second spacing members having different coefficients of thermal expansion and joined to define a junction at an axial location external to the cavity, the first and second spacing members being connected to the first and second mirrors respectively and extending axially therefrom to the junction.

Advantageously the axial extent of the first and second spacing members between the respective first and second mirrors and the junction is substantially greater than the distance of separation between the first and second mirrors.

This enables the rate of movement between the mirrors as a function of temperature to be enhanced.

Conveniently the second spacing member is annular to define an axially extending bore and the first spacing member extends axially within the bore in re-entrant configuration.

Preferably the second spacing member has a higher coefficient of thermal expansion than that of the first spacing member.

The first spacing member may be transparent and defining an end face on which is formed the first mirror. The spacing member in a preferred embodiment is fused silica.

The second spacing member in the preferred embodiment is formed of copper.

The second spacing member is conveniently bonded to the gain element.

Advantageously the cavity length is selected such that the gain band width of the gain medium is less than or substantially equal to the frequency separation of cavity modes of the resonance cavity.

This ensures single frequency lasing operation.

Conveniently the temperature regulating means comprises a Peltier element.

This has the advantage of allowing heat to be pumped either into or out of the components of the laser.

The temperature regulating means preferably comprises a thermometer for measuring the temperature of the gain element and a control circuit operable to actuate the Peltier element so as to maintain the gain element and the spacing means at a controlled temperature.

Advantageously the laser includes an enclosure means which encloses both the gain element and the spacing means so as to maintain them at a uniform temperature.

Optionally the laser may comprise a birefringent element located in the resonance cavity and operable to selectively polarise the output.

This has the advantage of concentrating the output energy of the laser in a desired polarisation state and obviates the need for subsequently using a polarising analyser to select part of the output where polarised light is required.

Preferably the first mirror is concave.

According to a further aspect of the present invention there is disclosed a method of operating a microchip laser comprising first and second mirrors at spaced locations along an optical axis and defining a resonance cavity therebetween;
the method comprising the steps of locating a gain element formed of a gain material in the cavity;
providing spacing means determining a temperature dependent distance of separation between the mirrors which is greater than the axial thickness of the gain element such that a variable gap is defined between the first mirror and a first face of the gain element; and
operating a temperature regulating means to control the temperature of the gain element and the spacing means.

The temperature may then be varied until a cavity mode frequency of the resonance cavity is within the gain band width of the gain material to thereby effect lasing.

Preferably the spacing means provides a rate of change of distance of separation with temperature which is greater than the rate of change of thickness of the gain element.

This has the advantage that, compared with a conventional microchip laser, the rate of change of cavity mode frequency with temperature is greatly enhanced to thereby minimise the temperature range over which the laser must be thermally tuned before achieving satisfactory lasing.

Advantageously a birefringent element may be located in the resonance cavity and oriented relative to the optical axis such that the output of the laser is polarised.

Preferred embodiments of the present invention will now be described by way of example only and with reference to the accompanying drawings of which;
Figure 1 is a schematic sectional elevation of a microchip laser in accordance with the present invention;
Figure 2 is an exploded view of the components of Figure 1;
Figure 3 is a schematic sectional elevation of the microchip laser of preceding Figures mounted in an enclosure and illustrating the location of a Peltier element;
Figure 4 is a schematic sectional elevation of a microchip laser according to an alternative embodiment of the present invention and including a birefringent element in the cavity;
Figure 5 is an exploded view of the components of Figure 4; and
Figure 6 is a graphical representation of the shift in frequency of cavity modes and peak gain with temperature.

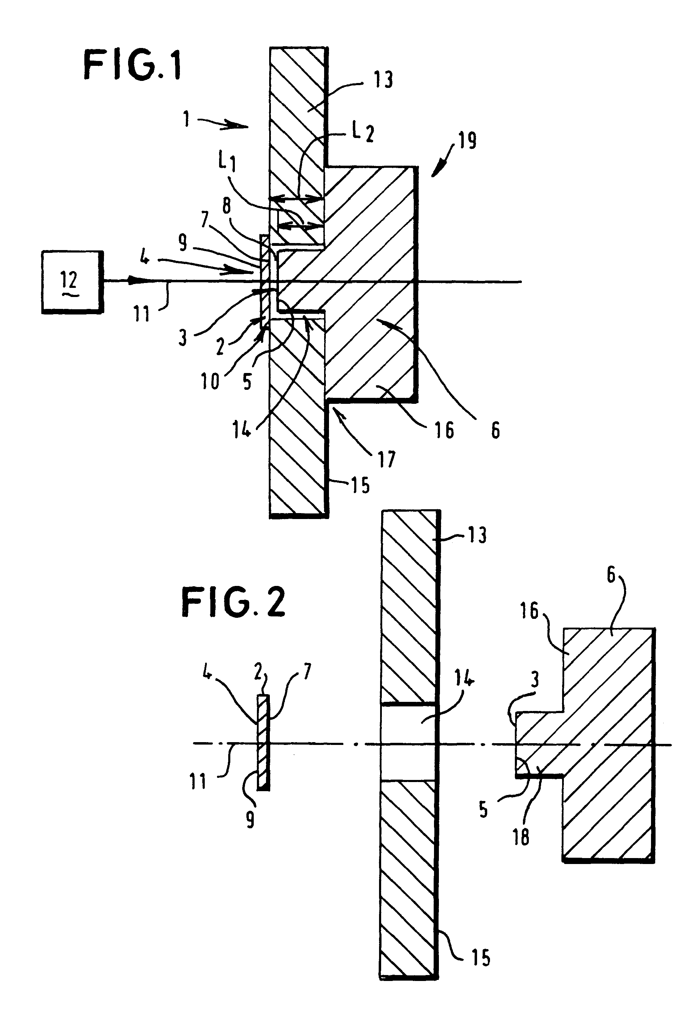

Figure 1 illustrates schematically a microchip laser 1 comprising a gain element 2 consisting of a wafer of Nd:YAG material and having a thickness of 0.5mm and a radius of 5mm. The gain element 2 is located between first and second mirrors 3 and 4 respectively, the first mirror being formed as a dielectric coating on an end face 5 of a first spacing member 6. The gain element 2 has a first face 7 which is separated from the first mirror 3 by an air gap 8 and has a second face 9 upon which the second mirror 4 is formed by means of a further dielectric coating.

The first mirror 3 is concave, having a radius of curvature of 30mm, and the first and second mirrors 3, 4 define therebetween a resonance cavity 10 having an optical axis 11. The first face 7 of the gain element 2 is coated with an anti-reflection coating for 1064nm and 800 to 850nm.

The first spacing member 6 is formed of fused silica, coated at the end face 5 with a 99% coating providing reflection at 1064nm and less than 5% reflection at 800 to 850nm.

The laser 1 is pumped by means of a laser diode 12 arranged to input light along the optical axis 11 through the second mirror 4 and the resultant output of the microchip laser is emergent along the optical axis through the first mirror 3 and the first spacing member 6.

The gain element 2 is peripherally bonded to an annular second spacing member 13 formed of copper. The second spacing member 13 extends in an axial direction away from the first face of the gain element so as to define a cylindrical bore 14 which is symmetrical about the axis 11.

An end face 15 of the second spacing member 13 extends in a radial plane relative to the axis 11 and is bonded to a radially projecting portion 16 of the first spacing member at a junction 17.

The first spacing member 6 has an axially extending portion 18 which projects into the bore 14 in re-entrant configuration so as to position the first mirror 3 proximal to the gain element 2 while the junction 17 remains axially spaced outside of the longitudinal extent of the resonant cavity 10 by a distance which is much greater than the separation between the first and second mirrors 3 and 4.

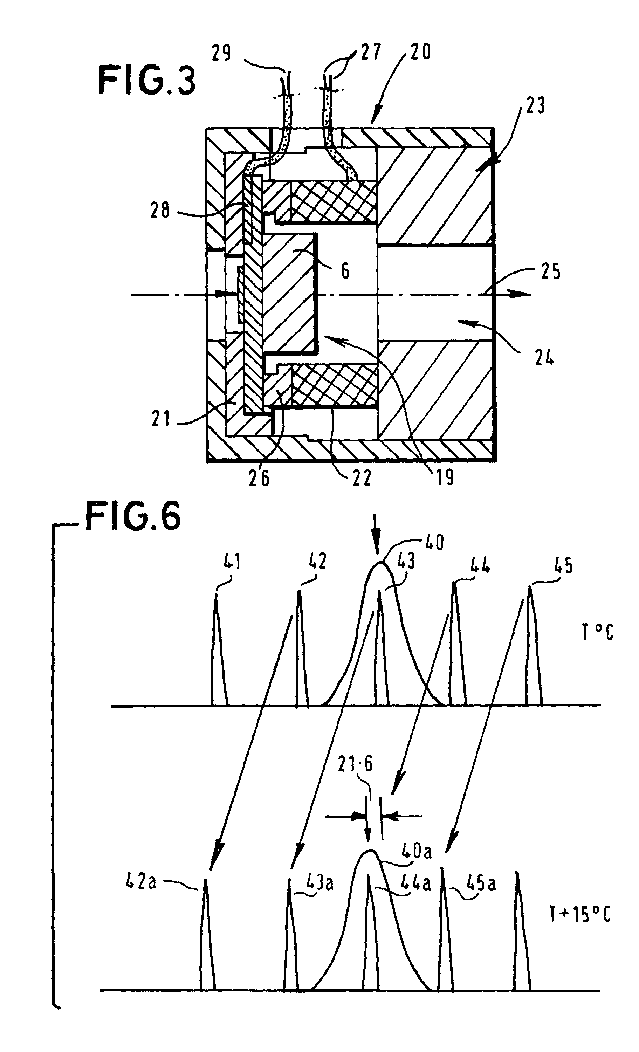

The gain element 2, the first spacing member 6 and the second spacing member 13 are bonded together to form a robust sub-assembly 19 which, as shown in Figure 3, is mounted within an enclosure 20 by means of an insulating annular support 21. An annular Peltier element 22 extends coaxially about the first spacing member 6 and is seated against an annular heat sink 23 defining an outlet aperture 24 through which the output light 25 is emergent.

A thermally conductive ring 26 extends in contact with both the Peltier element 22 and the end face 15 of the second spacing member 13 to thereby provide a heat flow path into and out of the subassembly 19 in response to heat pumping action of the Peltier element 22. The Peltier element 22 is powered by input conductors 27 connected to a control circuit (not shown) which receives a temperature input signal from a resistance thermometer 28 mounted on the second spacing member 13 and connected to the circuit by means of signal leads 29.

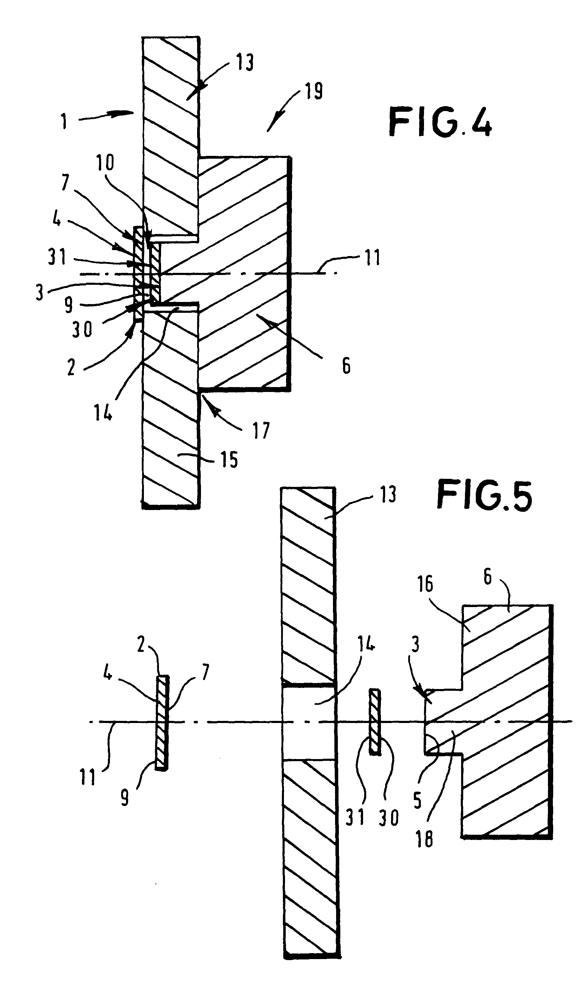

An alternative embodiment is illustrated in Figures 4 and 5 which will be described using correspondence reference numerals to preceding Figures where appropriate for corresponding elements.

In Figure 4 a microchip laser 1 has features corresponding to the laser of Figures 1 to 3 but further including a birefringent element 30 located in the resonance cavity 10. The birefringent element 30 comprises a wafer of calcite which is bonded to the first mirror 3 so as to be supported by the end face 5 of the first spacing member 6.

An anti-reflective coating 31 is provided on the exposed face of the birefringent element 30.

The birefringent element 30 is configured to have its optical axis disposed at about 45° to the optical axis of the laser 1. Birefringence differentially refracts components according to polarisation such that an extraordinary ray is propagated at an angle of about 7° to the optical axis of the laser 1 and an ordinary ray is propagated along the optical axis 11. This effectively spoils the Q for the polarisation state corresponding to the extraordinary ray thereby resulting in a laser output which is substantially linearly polarised. The energy of the laser output is thereby concentrated in a selected polarisation state, this arrangement being more efficient than having a laser output which is unpolarised and subsequently selecting the required polarisation state by a polarising analyser.

Figure 5 illustrates in exploded view the four components of the sub-assembly 19 of Figure 4.

In use, to operate the microchip laser 1 so as to produce a single frequency output to seed a Nd:YAG laser rod of a flash lamp pumped water cooled laser system, it is ideally necessary to run the laser rod and hence the microchip laser at an operating temperature of 35°C plus or minus 5°C (approximately).

The temperature regulating means comprising the Peltier element 22, thermometer 28 and control circuit are therefore actuated to bring the temperature within the enclosure 20 to a stable temperature of 35°C. The microchip laser 1 is pumped by delivering light from the laser diode 12 and the output of the microchip laser is monitored. It is possible that the cavity length (i.e. the optical path length between the first and second mirrors) will at this temperature be exactly an integral number of wavelengths corresponding to the peak gain frequency of the gain element at that temperature, in which case there will be a cavity mode frequency identical with the peak gain frequency and lasing will occur.

The cavity length has been deliberately configured to be sufficiently small such that the gain band width of the gain medium is less than or substantially equal to the frequency separation of cavity modes of the resonance cavity. It therefore follows that only a single lasing frequency will be sustained.

It is more likely however that the cavity length will not be precisely an integral number of wavelengths. Lasing may still occur if there is a cavity mode frequency within the gain band width of the gain medium in which case lasing will occur to provide an output which is less than the maximum potentially available.

It is far more likely however that there will be no cavity mode frequency sufficiently close to the peak gain frequency to provide satisfactory lasing operation or indeed to provide any lasing at all and in this case it will be necessary to adjust the temperature within the enclosure by activating the temperature control means.

If for example the operating temperature is gradually increased, the peak gain frequency will gradually change at a rate R_{P} of -1.44GHz per °C. The frequencies of the cavity modes will also change but at a different rate such that eventually a cavity mode frequency will become available within the gain bandwidth and lasing will occur.

The temperature change required to achieve this coincidence is proportional to the difference in the rate at which the cavity mode frequencies and the peak gain frequency vary with temperature. It is therefore useful to define a temperature range of the microchip laser as being that incremental temperature change required to translate operation of the laser from one operating condition at which the peak gain frequency coincides with a cavity mode frequency to a next operating condition at which the peak gain frequency coincides with a next successive cavity mode frequency.

The tuning range ideally therefore needs to be as small as possible such that minimal adjustment to the temperature of the laser subassembly is required to achieve satisfactory operation and to make available within any given temperature range as many as possible available operating points. The tuning range for a conventional microchip laser in which the first and second mirrors are formed directly on the first and second faces of the gain material is highly unsatisfactory in this respect. A typical example is that satisfactory operation at 20°C and 80°C is available, thereby giving a tuning range of 60°C as above defined.

This is because the conventional microchip laser has a cavity length which varies in a manner determined by the temperature coefficient of expansion of the gain material, which for Nd:YAG is relatively low.

The tuning range of the microchip laser 1 is however greatly improved because the spacing means constituted by the first and second spacing members 6, 13 provides a temperature dependent distance of separation between the mirrors which is greatly amplified by the use of first and second spacing members which extend or contract by significantly different amounts in response to temperature change.

Table 1 gives values of the rate of change of mode frequency with temperature, Rₘ, as a function of the rate of change with temperature of the size of the air gap, Rₐ. Rₘ is expressed in units of GHz per ° C and Rₐ is expressed in units of 10⁻⁶ cm per °C.
Rₐ is dependent on the length L₁ of the first spacing member 6 between the junction 17 and the end face 5 (see Figure 1);
the length L₂ of the second spacing member 13 measured between the junction 17 and the first face 7 of the gain element 2 (see Figure 1);
the coefficient of thermal expansion α₁ of the first spacing member 6 (i.e. fused silica); and
the coefficient of thermal expansion α₂ of the second spacing member 13 (i.e. copper); according to the equation

   Rₐ = α₂ L₂ - α₁ L₁

The values of Table 1 are calculated for a cavity in which the thickness of the gain element 2 is 0.5mm and the air gap at 20°C is 0.2mm. Negative values of Rₐ correspond to the possibility of having spacing means in which the temperature coefficient of expansion of the second spacing member 13 is less than that of the first spacing member 6.

In the above described example, the value of Rₐ is chosen by selecting values of L₁, L₂ and selecting materials having appropriate α₁, α₂ to be 3 x 10⁻⁶cm per °C so that the value of Rₘ is -10.47GHz per °C.

The difference Rₚ - Rₘ between the rate of change of peak gain frequency and the rate of change of mode frequency with temperature is therefore

Rₘ - Rₚ = -9.03GHz per °C

The mode spacing for the above cavity is 135GHz which, when divided by this value of Rₘ - Rₚ gives a tuning range of approximately 15°C.

The effect of a temperature change of 15°C on the cavity mode frequency and peak gain frequency is illustrated in Figure 6. The upper portion of Figure 6 shows graphically and schematically the gain curve 40 of the gain element 2 as a function of frequency at an initial temperature T, and superimposed, the characteristics of cavity modes 41 to 45.

The lower half of Figure 6 shows a corresponding graph at a temperature T + 15°C in which the gain curve 40a has shifted by -21.6GHz and each of the modes 42, 43, 44, 45 have shifted to new positions 42a, 43a, 44a and 45a respectively by 156.6GHz. Each of these operating points at temperatures T and T + 15°C correspond to coincidence between the peak gain curve and a respective one of the cavity modes. Successive operating points can also be achieved by successive increments of 15°C, thereby bringing successive modes into coincidence with the peak of the gain curve.

Alternative embodiments of the present invention are envisaged in which for example the second spacing member 13 is formed of materials other than copper, aluminium being for example a suitable material and similarly there may be alternative materials for use in place of the fused silica of the first spacing member 6.

Alternative gain materials for the gain element 2 may also be utilised such as for example Nd:GSGG. For each gain material, Rₚ will generally have a different value requiring Rₐ to be selected appropriately to achieve a desired tuning range.

The first and/or second mirrors 3, 4 may be concave with a radius of curvature typically in the range 20 to 40 mm in order to simplify alignment.

Although in an ideal situation it is preferred to operate a laser in accordance with the present invention at a temperature such that the peak gain coincides with a cavity mode, stable operation is also possible at temperatures above and below such ideal operating points provided that the cavity mode frequency corresponds to a gain of at least 40% (approximately) of the peak gain. It is therefore possible to continuously tune the output of the laser by adjusting the temperature and typically such a laser is tunable over approximately 30% of the tuning range.

**TABLE 1**

| Rₘ | Rₐ |
|---|---|
| | |
| 2.34 | - 2 |
| - 0.22 | - 1 |
| - 2.78 | 0 |
| - 5.34 | 1 |
| - 7.91 | 2 |
| - 10.47 | 3 |
| - 13.03 | 4 |

## Claims

1. A microchip laser comprising first and second mirrors at spaced locations along an optical axis and defining a resonance cavity therebetween;
a gain element formed of a gain material located in the cavity;
spacing means providing a temperature dependent distance of separation between the mirrors which is greater than the axial thickness of the gain element such that a variable gap is defined between the first mirror and a first face of the gain element; and
temperature regulating means operable to control the temperature of the gain element and the spacing means.

2. A microchip laser as claimed in claim 1 wherein the second mirror is formed on a second face of the gain element.

3. A microchip laser as claimed in any preceding claim wherein the spacing means comprises first and second spacing members having different coefficients of thermal expansion and joined to define a junction at an axial location external to the cavity, the first and second spacing members being connected to the first and second mirrors respectively and extending axially therefrom to the junction.

4. A microchip laser as claimed in claim 3 wherein the axial extent of the first and second spacing members between the respective first and second mirrors and the junction is substantially greater than the distance of separation between the first and second mirrors.

5. A microchip laser as claimed in any of claims 3 and 4 wherein the second spacing member is annular to define an axially extending bore and wherein the first spacing member extends axially within the bore in re-entrant configuration.

6. A microchip laser as claimed in claim 5 wherein the second spacing member has a higher coefficient of thermal expansion than that of the first spacing member.

7. A microchip laser as claimed in any of claims 3 to 6 wherein the first spacing member is transparent and defines an end face on which is formed the first mirror.

8. A microchip laser as claimed in claim 7 wherein the first spacing member is formed of fused silica.

9. A microchip laser as claimed in any of claims 3 to 8 wherein the second spacing member is formed of copper.

10. A microchip laser as claimed in any of claims 3 to 9 wherein the second spacing member is bonded to the gain element.

11. A microchip laser as claimed in any preceding claim wherein the cavity length is selected such that the gain band width of the gain medium is less than or substantially equal to the frequency separation of cavity modes of the resonance cavity.

12. A microchip laser as claimed in any preceding claim wherein the temperature regulating means comprises a Peltier element.

13. A microchip laser as claimed in claim 12 wherein the temperature regulating means comprises a thermometer for measuring the temperature of the gain element and a control circuit operable to actuate the Peltier element so as to maintain the gain element and the spacing means at a controlled temperature.

14. A microchip laser as claimed in any preceding claim comprising enclosure means which encloses both the gain element and the spacing means so as to maintain them at a uniform temperature.

15. A microchip laser as claimed in any preceding claim comprising a birefringent element located in the resonance cavity and operable to selectively polarise the output.

16. A microchip laser as claimed in any preceding claim wherein the first mirror is concave.

17. A method of operating a microchip laser comprising first and second mirrors at spaced locations along an optical axis and defining a resonance cavity therebetween;
the method comprising the steps of locating a gain element formed of a gain material in the cavity;
providing spacing means determining a temperature dependent distance of separation between the mirrors which is greater than the axial thickness of the gain element such that a variable gap is defined between the first mirror and a first face of the gain element; and
operating a temperature regulating means to control the temperature of the gain element and the spacing means.

18. A method as claimed in claim 17 including the step of varying the temperature until a cavity mode frequency of the resonance cavity is within the gain bandwidth of the gain material to thereby effect lasing.

19. A method as claimed in claim 18 wherein the spacing means provides a rate of change of distance of separation with temperature which is greater than the rate of change of thickness of the gain element.

20. A method as claimed in any of claims 17 to 19 including the step of locating a birefringent element in the resonance cavity and orienting the birefringent element relative to the optical axis such that the output of the laser is polarised.
